# DEMANDE DE BREVET EUROPEEN

(11) **EP 3 400 791 A1**
(43) Date de publication de la demande: **14.11.2018**
(21) Numéro de dépôt: 18171369.4
(22) Date de dépôt: 08.05.2018
(51) Int. Cl.: A01G 31/02

(54) **INSTALLATION AÉROPONIQUE, SYSTÈME ET CONTAINER DE FRET**

(30) Priorité: 09.05.2017 FR 1754035
(71) Demandeur: Agricool, 93120 La Courneuve (FR)
(72) Inventeur: GRU, Gonzague, 80200 Estrées Mons (FR); OLIVER, Paul Hector, 75003 Paris (FR); ROSSI, Guillaume, 94170 Le Perreux sur Marne (FR); JAY, Pierre, 75015 Paris (FR)
(74) Mandataire: Cabinet Plasseraud

(57) **Abrégé**

Une installation (1) aéroponique de croissance de plant comprend :
- au moins un support vertical (2) comprenant au moins une face (3) apte à définir un intérieur (4) du support vertical (2) s'étendant d'une extrémité supérieure (5b) à une extrémité inférieure (5a) du support vertical (2), dans laquelle ladite au moins une face (3) comprend une pluralité d'ouvertures de réception (6) aptes chacune à réceptionner un récipient de culture (7),
- une pluralité de récipients de culture (7) comprenant chacun :
o une enceinte (7a) de section transversale (7b) définissant un espace intérieur (7c), et une première et une deuxième extrémités (7d, 7e) ouvertes, lesdites enceintes (7a) étant aptes à être réceptionnés dans une ouverture de réception (6) de telle sorte que la deuxième extrémité (7e) de l'enceinte (7a) est à l'intérieur du support vertical (2),
o un matériau (8) déformable pour permettre la croissance d'un plant, ledit matériau (8) étant disposé dans l'espace intérieur (7c) des enceintes (7a), et
- un système de brumisation (10) apte à pulvériser un liquide nutritif sur les racines du plant en l'extrémité supérieure (5b) du support vertical (2).

## Description

L'invention concerne le domaine technique de la culture de plants en aéroponie, notamment des installations aéroponiques de croissance de plants.

Plus précisément, l'invention concerne le domaine des installations aéroponiques de croissance de plants, des systèmes comprenant une installation aéroponique et des containeurs de fret comprenant de telles installations.

Actuellement, la culture de plants en aéroponie est en plein essor. La culture de plants en aéroponie est une des méthodes récentes utilisées dans la culture de plants en intérieur ou en extérieur qui connaît un grand succès. En aéroponie, la croissance des plants se fait de manière hors sol. Les fonctions de support et d'approvisionnement en eau et en nutriment, naturellement remplies par le sol, sont assurés par des supports de plants, par exemple des tours, et par des vaporisations ou des jets permanents de solution nutritive en circuit fermé.

On connaît notamment le document WO2017/058116 qui décrit une installation aéroponique comprenant une tour verticale le long de laquelle sont aménagés des orifices pouvant accueillir des paniers. Chaque panier est garni de mousse dans laquelle est plantée une graine qui poussera jusqu'à obtenir un plant. Les paniers comprennent de multiples ouvertures permettant aux racines de se développer et à la solution nutritive d'entrer et sortir du panier. La solution nutritive est délivrée au « goutte à goutte » par une douche se situant à l'extrémité supérieure de la tour verticale.

Toutefois, la délivrance de la solution nutritive au « goutte à goutte » par une douche ne permet pas un contact homogène des racines des plants avec la solution nutritive. De plus, la solution nutritive doit d'abord passer dans les ouvertures des paniers pour entrer en contact avec les racines.

La présente invention vient améliorer la situation.

A cet effet, l'invention a pour objet une installation aéroponique de croissance de plants comprenant
- au moins un support vertical comprenant au moins une face apte à définir un intérieur du support vertical s'étendant d'une extrémité supérieure à une extrémité inférieure du support vertical, dans laquelle ladite au moins une face comprend une pluralité d'ouvertures de réception aptes chacune à réceptionner un récipient de culture,
- une pluralité de récipients de culture comprenant chacun :
   ∘ une enceinte de section transversale définissant un espace intérieur, et une première et une deuxième extrémités ouvertes, lesdits récipients de culture étant aptes à être réceptionnés dans une ouverture de réception de telle sorte que la deuxième extrémité du récipient de culture est à l'intérieur du support vertical,
   ∘ un matériau déformable pour permettre la croissance d'un plant, ledit matériau étant disposé dans l'espace intérieur des récipients de culture, et
- un système de brumisation apte à pulvériser un liquide nutritif sur les racines du plant en l'extrémité supérieure du support vertical.

Grace à ces dispositions, les racines des plants sont directement en contact avec la solution nutritive délivrée de manière homogène pour toutes les racines des plants compris dans l'installation.

Selon une réalisation, l'enceinte du récipient de culture comprend une section transversale au niveau de la première extrémité de plus grande taille qu'une section transversale au niveau de la deuxième extrémité du récipient de culture.

Selon une réalisation, l'ouverture de réception comprend une section de forme polygonale comprenant autant de côtés que la section transversale de l'enceinte du récipient de culture, ladite section de l'ouverture de réception étant de plus petite taille que la première extrémité du récipient de culture, et de plus grande taille que la deuxième extrémité du récipient de culture.

Selon une réalisation, le récipient de culture est apte à être réceptionné obliquement dans l'ouverture de réception, de sorte que la première extrémité ouverte du récipient de culture est orientée vers le haut lorsque ledit récipient de culture est réceptionné dans l'ouverture de réception.

Selon une réalisation, l'installation comprend en outre un système de récupération du liquide nutritif disposé au niveau de l'extrémité inférieure du support vertical.

Selon une réalisation, le système de brumisation est apte à délivrer le liquide nutritif sous la forme d'un brouillard.

Selon une réalisation, l'installation comprend en outre un système lumineux apte à éclairer la première extrémité des récipients de culture.

Selon une réalisation, le récipient de culture comprend un taquet déformable élastiquement au niveau de sa première extrémité, ledit taquet étant apte à venir en appui contre un intérieur de ladite face du support vertical, de sorte que le récipient de culture est maintenu dans l'ouverture de réception.

Selon une réalisation, les ouvertures de réception présentent une géométrie de non révolution.

Selon une réalisation, la section transversale présente une forme polygonale.

Selon une réalisation, le matériau est une mousse en plastique inerte.

Selon une réalisation, les ouvertures de réceptions sont espacées transversalement sur la face du support vertical.

La présente invention vise aussi un support vertical comprenant au moins une face apte à définir un intérieur s'étendant d'une extrémité supérieure à une extrémité inférieure du support vertical, ladite au moins une face comprenant une pluralité d'ouvertures de réception, ledit support vertical comprenant en outre un accès autorisant une brumisation de l'intérieur en l'extrémité supérieure dudit support vertical.

La présente invention vise aussi un système comprenant une installation selon l'invention, dans laquelle la pluralité de récipients de culture est une première pluralité de récipients de culture, ledit système comprenant en outre une deuxième pluralité de récipients de culture de dimensions différentes de la première pluralité de récipients de culture et réceptionnables dans lesdites ouvertures de réception.

La présente invention vise aussi un containeur comprenant une installation selon l'invention.

On décrit maintenant brièvement les figures des dessins.
La figure 1 illustre un containeur de fret comprenant une installation aéroponique selon l'invention.
La figure 2 est une vue en coupe de l'installation aéroponique selon un mode de réalisation de l'invention.
La figure 3a illustre un support vertical comprenant des récipients de culture selon un mode de réalisation de l'invention.
La figure 3b illustre les ouvertures de réception d'un support vertical aptes à réceptionner des récipients de culture selon le mode de réalisation illustré figure 2a.
La figure 4a illustre un support vertical comprenant des récipients de culture selon un autre mode de réalisation de l'invention,
La figure 4b illustre les ouvertures de réception d'un support vertical aptes à réceptionner des récipients de culture selon le mode de réalisation illustré figure 3a,
Les figures 5a à 5e sont des vues de dessus d'un support vertical selon différents modes de réalisation,

Ci-après un exposé détaillé de plusieurs modes de réalisation de l'invention assorti d'exemples et de référence aux dessins.

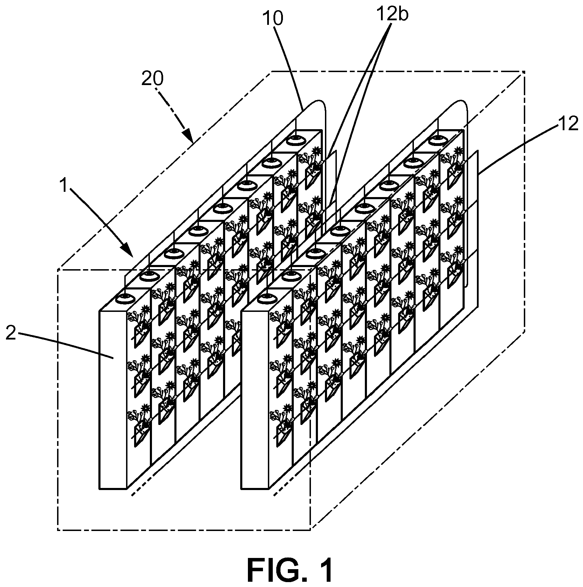

La figure 1 illustre un container de fret 20 comprenant une installation aéroponique 1 de croissance de plants selon l'invention. L'installation aéroponique 1 comprend une pluralité de supports verticaux 2, un système de brumisation 10 apte à alimenter les plants, et un système lumineux 12.

Bien entendu, le nombre de plants représenté sur la figure 1 est là à titre d'exemple non limitatif.

Dans la suite de la description, par « support vertical » on entend un support strictement orienté selon la direction verticale, parallèle à la direction de la gravité, ou incliné selon un angle d'environ 5° avec la verticale.

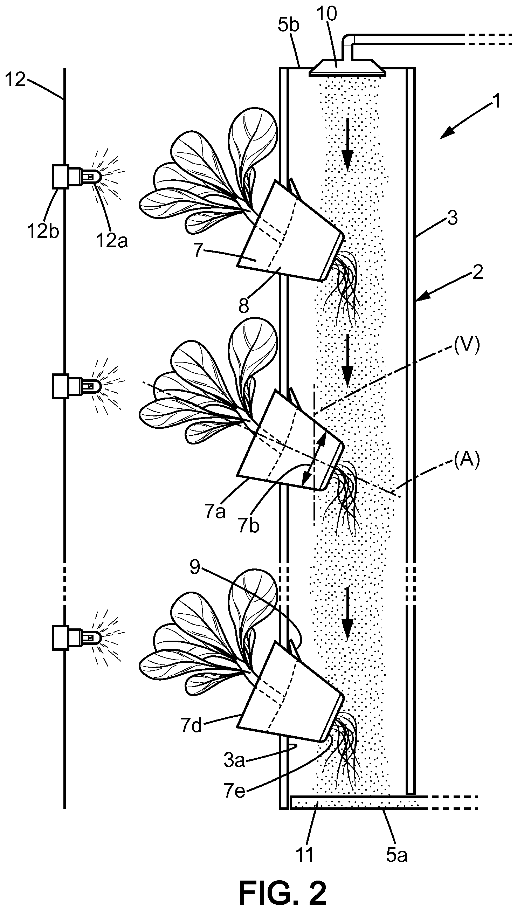

En référence à la figure 2, on décrit une installation aéroponique 1 de croissance de plants selon un mode de réalisation de l'invention. Chaque support vertical 2 comprend au moins une face 3 définissant un intérieur 4 du support vertical 2. L'intérieur 4 du support vertical 2 s'étend longitudinalement d'une extrémité inférieure 5a à une extrémité supérieure 5b du support vertical 2.

Les supports verticaux 2 présentent par exemple une section transversale fermée circulaire lorsqu'ils comprennent une unique face 3. Dans le cas où les supports verticaux 2 comprennent plus d'une face, plus précisément plus de deux faces, ils présentent une section transversale fermée polygonale. Par exemple, si la section transversale des supports verticaux 2 présente une forme triangulaire, les supports verticaux 2 comprennent alors trois faces. Les supports verticaux 2 peuvent présenter autant de faces 3 que possible. La section transversale des supports verticaux 2 peut par exemple être de forme triangulaire, quadrilatère, carrée, rectangulaire, hexagonale, etc. La forme des sections transversales est définie par le nombre de faces 3 définissant l'intérieur 4 des supports verticaux 2.

Dans la suite de la description, on considère que les supports verticaux 2 présentent une section transversale polygonale. Bien entendu, les exemples et modes de réalisation décrits ci-après s'appliquent aussi au cas où les supports verticaux 2 ne comprennent qu'une seule face 3, et donc ont une section transversale circulaire.

Les extrémités inférieure 5a et supérieure 5b sont par exemple couvertes, de sorte que les supports verticaux 2 sont totalement clos. En variante, seulement l'une ou l'autre des extrémités 5a, 5b peut être couverte, ou aucune.

La pluralité de supports verticaux 2 présente des ouvertures de réception 6 aptes à recevoir des récipients de culture 7 dans lesquels les plants sont destinés à pousser. Les ouvertures de réception 6 sont par exemples des découpes effectuées sur l'une des faces 3 des supports verticaux 2.

Les ouvertures de réception 6 peuvent être espacées longitudinalement le long d'une face 3 des supports verticaux 2, transversalement sur une même face 3 des supports verticaux 2, ou les deux.

Les longueurs longitudinale et transversale des faces 3 des supports verticaux 2 peuvent varier en fonction de la disposition et du nombre d'ouvertures de réception 6.

Sur le mode de réalisation non limitatif représenté sur la figure 2, les ouvertures de réception 6 sont prévues le long d'une même face 3 du support vertical 2. Les ouvertures de réception 6 sont par exemple de forme polygonale, comprenant au moins trois côtés. La forme des ouvertures de réception 6 permet par exemple d'y insérer les récipients de culture 7.

Les récipients de culture 7 comprennent par exemple une enceinte 7a de section transversale 7b. La section transversale 7b peut être de forme circulaire, ne comprenant qu'un seul côté, ou encore de forme polygonale, comprenant plusieurs côtés, notamment plus de deux côtés. L'enceinte 7a définit un espace intérieur 7c et une première et une deuxième extrémités 7d, 7e. Les première et deuxième extrémités 7d, 7e peuvent être ouvertes.

Les ouvertures de réception 6 comprennent par exemple le même nombre de côtés que la section transversale 7b des récipients de culture 7.

Dans la suite de la description, on considère que les récipients de culture 7 présentent une section transversale 7b de forme polygonale. Bien entendu, les exemples et modes de réalisation décrits ci-après s'appliquent aussi au cas où les récipients de culture 7 présentent une section transversale 7b circulaire.

Dans un mode de réalisation, la section transversale 7b au niveau de la deuxième extrémité 7e est par exemple plus petite que la section transversale 7b au niveau de la première extrémité 7d du récipient de culture 7, de sorte que les récipients de culture 7 ont généralement une forme de tronc de cône et, dans le cas où il y a quatre côtés, de tronc de pyramide.

On peut alors définir un axe A, perpendiculaire à la section transversale 7b des récipients de culture 7 et passant en son centre.

Les récipients de culture 7 sont par exemple réceptionnés obliquement dans les ouvertures de réception 6, de sorte qu'une partie des récipients de culture 7, notamment au niveau de la première extrémité 7d, dépasse à l'extérieur des supports verticaux 2, tandis que l'autre partie des récipients de culture 7 est disposée à l'intérieur 4 des supports verticaux 2, et de sorte que la première extrémité 7d est orientée vers le haut. L'axe A des récipients de culture 7 et une direction verticale V parallèle à la direction de la gravité, forment alors un angle compris entre 0° et 90. La valeur de l'angle est notamment déterminée en fonction du type de plant à faire pousser dans le récipient de culture 7.

Pour permettre cette disposition, on peut alors prévoir que les ouvertures de réception 6 présentent une section 6a plus petite que la plus grande section transversale 7b des récipients de culture 7.

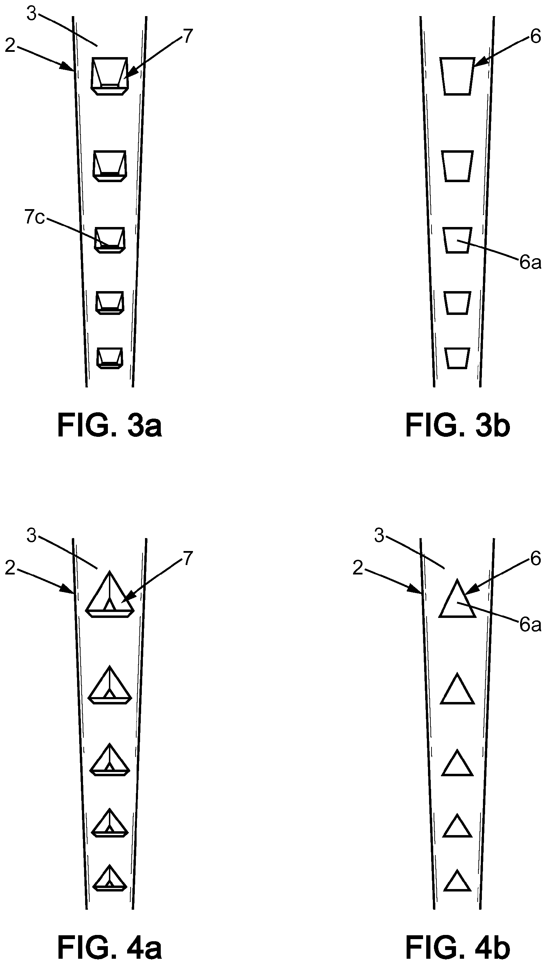

Par exemple, dans le mode de réalisation non limitatif représenté sur les figures 3a et 3b, les récipients de culture 7 ont une section transversale 7b de forme carrée qui correspond à un polygone à quatre côtés. Les ouvertures de réception 6 comprennent également quatre côtés.

Les ouvertures de réception 6 présentent alors un côté de longueur légèrement inférieure à l'un des côtés de la première extrémité 7d du récipient de culture 7 et un côté de longueur supérieure à l'un des côtés de la deuxième extrémité 7e du récipient de culture 7, de sorte que l'ouverture de réception 6 est de forme généralement trapézoïdale. Cette géométrie permet notamment de maintenir les récipients de culture 7 obliquement dans les ouvertures de réception 6.

Le côté de plus petite longueur est par exemple le côté faisant face à l'extrémité inférieure 5a du support vertical, et le côté de plus grande longueur est par exemple le côté faisant face à l'extrémité supérieure 5b du support vertical 2.

Cette géométrie est applicable quelle que soit la forme et le nombre de côtés de la section transversale 7b du récipient de culture 7.

Par exemple, comme illustré sur les figures 4a et 4b, les récipients de culture 7 peuvent présenter une section transversale 7b de forme triangulaire. La première extrémité 7d du récipient de culture 7 comprend toujours une section transversale 7b supérieure à la section transversale 7b au niveau de la deuxième extrémité 7e.

Dans ce cas, on peut prévoir que les ouvertures de réception 6 sont également de forme triangulaire. Les ouvertures de réception 6 sont par exemple orientées de telle manière qu'un angle de l'ouverture de réception 6 est orienté vers l'extrémité supérieure 5b du support vertical 2.

Pour permettre le maintien des récipients de culture 7 dans les ouvertures de réception 6, on prévoit par exemple de diminuer légèrement la taille de l'angle orienté vers l'extrémité supérieure 5b, et de diminuer la longueur de la base de l'ouverture de réception 6.

De cette manière, la première extrémité 7d des récipients de culture 7 est orientée vers le haut, et les récipients de culture 7 sont réceptionnés obliquement dans les ouvertures de réception 6.

Ces exemples illustratifs ne sont pas limitatifs. Par exemple, on peut prévoir des récipients de culture 7 de section transversale 7b comprenant plus de quatre côtés.

Les récipients de culture 7 peuvent en outre être munis d'un taquet 9 déformable élastiquement au niveau de la première extrémité 7d. Le taquet 9 s'étend par exemple transversalement à l'enceinte 7a du récipient de culture 7. Le taquet 9 est par exemple destiné à venir en appui contre un intérieur 3a d'une face 3 de manière à empêcher le basculement du récipient de culture 7 hors de l'ouverture de réception 6.

Si un utilisateur souhaite retirer un récipient de culture 7 d'une ouverture de réception 6, il suffit de tirer le récipient de culture 7 vers l'extérieur. La force exercée par l'utilisateur entraîne la déformation du taquet 9 permettant ainsi de libérer le récipient de culture 7.

En variante, on peut prévoir un taquet 9 fait en matériau peu déformable élastiquement et un support vertical 2 fait en un matériau déformable élastiquement, au moins dans une zone autour des ouvertures de réception 6. De cette manière, lorsque l'utilisateur insère ou retire un récipient de culture 7 d'une ouverture de réception 6, c'est la face 3 du support vertical 2 comprenant l'ouverture de réception 6 qui se déforme élastiquement. De cette manière, le taquet 9 risque moins d'être altéré par des déformations élastiques répétitives à long terme.

L'espace intérieur 7c des récipients de culture 7 peuvent être garnis d'un matériau 8 servant à maintenir le plant dans le récipient de culture 7. Le matériau 8 est inséré dans l'enceinte 7a de telle sorte qu'il ne dépasse pas hors de l'enceinte 7a du récipient de culture 7. Le matériau 8 n'a pas vocation à guider le liquide nutritif sur le système racinaire du plant. Le matériau 8 est par exemple de la mousse polymère adaptée à la culture de plants, par exemple de la mousse en plastique inerte.

On insère par exemple de jeunes plants dans le matériau 8. Cela permet, entre autre, de pouvoir sélectionner les plants qui sont le plus à même de croître et de produire lorsqu'ils arrivent à maturité.

En variante, on peut planter une graine dans le matériau 8, de sorte que l'intégralité de la croissance du plant se fait dans un récipient de culture 7.

Le matériau 8 est inséré dans les récipients de culture 7 de sorte que le système racinaire du plant va se développer au niveau de la deuxième extrémité 7e des récipients de culture 7 et que le système caulinaire du plant va se développer au niveau de la première extrémité 7d. Ainsi, lorsque les récipients de culture 7 sont insérés dans les supports verticaux 2, le système racinaire des plants se trouve à l'intérieur 4 des supports verticaux 2, et le système caulinaire des plants se trouve à l'extérieur des supports verticaux 2. Le plant est maintenu dans le récipient de culture 7 par compression du matériau 8 en une région intermédiaire entre le système racinaire des plants et le système caulinaire des plants.

La taille des récipients de culture 7 peut varier en fonction des types de plants. Par exemple, la section transversale 7b au niveau de la première extrémité 7d peut être plus ou moins grande. Par exemple, si la densité du feuillage du plant est importante, une section transversale 7b au niveau de la première extrémité va être plus importante que pour un plant ne développant que peu de feuillage.

D'autre part, la forme des récipients de culture 7 et des ouvertures de réception 6 permet d'éviter un mouvement des récipients de culture 7 lorsqu'ils sont insérés dans le support vertical 2, par exemple une rotation, pouvant entraîner la chute des récipients de culture 7 ou l'altération des plants. De préférence, l'ouverture de réception 6 n'est pas de symétrie de révolution.

On peut prévoir que, les ouvertures de réception 6 sont aptes à recevoir des récipients de culture 7 de différentes tailles, de sorte que plusieurs sortes de plants peuvent être cultivées sans modifier les supports verticaux 2.

Afin de permettre la croissance des plants, l'installation 1 comprend en outre un système de brumisation 10. Le système de brumisation 10 est par exemple apte à projeter un liquide nutritif sur le système racinaire des plants sous la forme de brouillard. Le brouillard est composé de gouttelettes de liquide nutritif d'une taille par exemple comprise entre 10µm et 30µm. Le liquide nutritif est par exemple composé d'eau et de nutriments adaptés à la croissance des plants. Un système de brumisation 10 est par exemple prévu pour chaque support vertical 2.

Le système de brumisation 10 peut comprendre une buse située au niveau de l'extrémité supérieure 5b de chaque support vertical 2, de sorte que le liquide nutritif est délivré dans l'intérieur 4 de chaque support vertical 2.

En variante, on peut prévoir que, pour un même support vertical 2, plus d'une buse est utilisée pour délivrer le liquide nutritif dans l'intérieur 4 du support vertical 2, de mieux homogénéiser la diffusion du liquide nutritif.

Le liquide nutritif parcourt l'intérieur 4 du support vertical 2 de l'extrémité supérieure 5b à l'extrémité inférieure 5a sous l'effet de la gravité de manière à entrer en contact avec le système racinaire de tous les plants disposés dans les récipients de culture 7 portés par le support vertical 2. Le liquide nutritif est notamment guidé par les faces 3 du support vertical 2 et reste confiné dans l'intérieur 4.

Le système de brumisation 10 comprend en outre un système de récupération 11 du liquide nutritif situé au niveau de l'extrémité inférieure 5a de chaque support vertical 2. Le système de récupération 11 est par exemple apte à transporter le liquide nutritif usagé vers une chambre d'analyse (non représentée) afin de déterminer si le liquide nutritif peut être pulvérisé à nouveau sur les plants ou si un traitement est nécessaire. Dans ce dernier cas, le liquide nutritif peut être traité dans la chambre d'analyse, par exemple en enrichissant le liquide nutritif en nutriments.

L'installation 1 peut également comprendre un système lumineux 12. Le système lumineux 12 est par exemple disposé à l'extérieur d'un support vertical 2, face aux récipients de culture 7, de sorte qu'il éclaire le système caulinaire des plants. Le système lumineux 12 comprend par exemple des diodes électroluminescentes 12a (ou « DEL ») à basse consommation. Le système lumineux 12 est par exemple composé d'une pluralité de tubes lumineux 12b comprenant les dels 12a. Les tubes lumineux 12b sont par exemple orientés à l'horizontale, de sorte que chaque tube lumineux 12b illumine une pluralité de supports verticaux 2. On prévoit par exemple que les dels 12a des tubes lumineux 12b sont disposés face aux récipients de culture 7 lorsqu'ils sont insérés dans les supports verticaux 2.

On peut par exemple prévoir qu'un système lumineux 12 comprend suffisamment de tubes lumineux 12b pour illuminer l'ensemble des récipients de culture 7 d'une face 3 d'un support vertical 2. On peut en outre prévoir que plusieurs systèmes lumineux 12 sont nécessaires pour illuminer les récipients de culture 7 d'une face 3 complète d'un support vertical 2.

Les systèmes lumineux sont par exemple montés de manière amovible sur une structure (non représentée) comprise dans le containeur 20.

On peut prévoir un système lumineux 12 pour chaque support vertical 2.

Le système lumineux 12 et le système de brumisation 10 peuvent être configurés en fonction des types de plants de sorte que la croissance et le cycle de pousse des plants sont respectés.

Les plants sont en outre protégés par l'enceinte 7a des récipients de culture 7 qui évitent que les parties du plant ne supportant pas d'être au contact du liquide nutritif soient exposées.

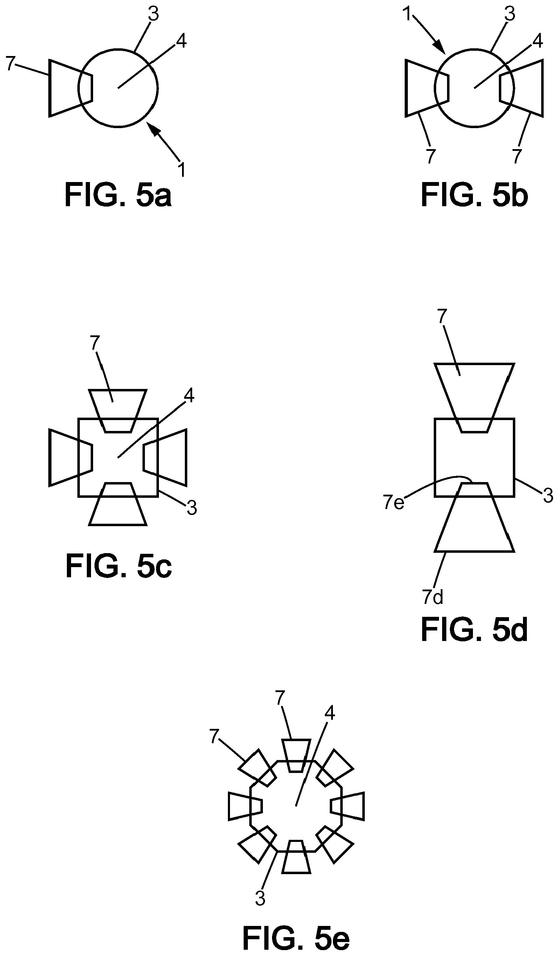

Les figures 5a à 5b illustrent d'autres variantes de réalisation des supports verticaux 2.

Comme décrit ci-avant, et en référence aux figures 5a et 5b, les supports verticaux 2 peuvent par exemple comprendre une face 3, définissant un intérieur 4 de section transversale circulaire.

Sur la figure 5a, des récipients de culture 7 sont espacés longitudinalement le long de la face 3. Vu de haut, un unique récipient de culture 7 est visible mais il est entendu que d'autres peuvent se trouver dans son alignement.

Sur la figure 5b, deux rangées longitudinales de récipients de culture 7 se font face. Ainsi, il est possible d'optimiser encore l'utilisation des supports verticaux 2 en intégrant plus d'une rangée de récipients de culture 7 sur un même support 2.

Sur les figures 5c et 5d, un support vertical 2 de section transversale carrée a été représenté.

Sur la figure 5c, chacune des faces 3 du support vertical 2 comprend des récipients de culture 7.

La taille des récipients de culture 7 et du support vertical 2 sont adaptés au nombre de faces comprenant des récipients de culture 7 afin que les systèmes racinaires des plants ne s'entremêlent pas durant la pousse des plants. Ainsi, lorsque les plants arrivent à maturité, il est toujours facile de retirer les récipients de culture 7 du support vertical 2 sans arracher les racines.

Sur la figure 5d, on a représenté un support vertical 2 dont deux faces 3 comprennent des récipients de culture 7. Les récipients de culture 7 présentent des sections transversales 7b au niveau de leur première extrémité 7d bien plus large que celles des récipients de culture 7 représentées sur les figures 4a à 4c. Ce type de récipients de culture 7 est particulièrement adapté à la croissance de plants très feuillus, par exemple de la rhubarbe ou du chou.

Si l'installation est utilisée pour la croissance de plants encombrants, notamment la rhubarbe ou le chou qui sont très feuillus et denses, on peut prévoir de n'utiliser qu'un support vertical 2 sur deux, afin de ne pas gêner la croissance des plants. Dans ce cas, le système de brumisation 10 propre au support vertical 2 non utilisé peut être coupé afin de ne pas gâcher de liquide nutritif.

Sur la figure 5e, on a représenté un support vertical 2 dont la section transversale comprend huit côtés. Ce type de géométrie permet notamment d'insérer un nombre très important de récipients de culture 7.

Les exemples décrits ci-avant sont donnés à titre purement illustratif.

On décrit ci-après un exemple de processus permettant la croissance d'un plant dans l'installation 1.

Dans un premier temps, on fournit un jeun plant que l'on insère dans le matériau 8. On intègre ensuite le matériau 8 dans un récipient de culture 7 de sorte que le système racinaire du plant fait face à la deuxième extrémité 7e du récipient de culture 7 et que le système caulinaire fait face à la première extrémité 7d.

Le matériau 8 est par exemple déformable et compressible. Le matériau 8 et le plant sont maintenus dans le récipient de culture 7 par compression du matériau 8 dans l'enceinte du récipient de culture 7. La zone de compression est par exemple située entre le système racinaire et le système caulinaire du plant.

Puis, on insère le récipient de culture 7 dans une ouverture de réception 6. Durant l'insertion, le taquet 9 se déforme élastiquement puis retrouve sa forme d'origine lorsqu'il est inséré dans l'ouverture de réception 6, de sorte que le taquet 9 bute sur l'intérieur 3a de la face 3 comprenant l'ouverture de réception 6. Le taquet 9 permet notamment d'empêcher un basculement du récipient de culture 7 hors de l'ouverture de réception 6, par exemple causé par le poids du plant.

Le liquide nutritif dispensé par le système de brumisation 10 sur le système racinaire du plant, et le système lumineux 12 qui éclaire le système caulinaire du plant, permettent la croissance du plant.

Régulièrement, on cueille les produits résultants de la croissance du plant. Par exemple, le plant va produire des fruits, des fleurs, des feuilles ou encore des tiges.

Quand le plant ne produit plus, on retire le récipient de culture 7 en le tirant hors de l'ouverture de réception 6. Cela va entraîner la déformation élastique du taquet 9 qui permet de retirer le récipient de culture. Le plant peut ensuite être retiré du matériau 8 pour être recyclé, et un plant plus jeune peut être inséré dans le matériau 8. On reproduit alors les étapes décrite ci-avant.

En variante, on peut prévoir d'insérer le matériau 8 et le jeune plant dans le récipient de culture 7 quand le récipient de culture 7 est déjà inséré dans l'ouverture de réception 6. De même, on peut prévoir de retirer le matériau 8 et le plant à recycler en laissant le récipient de culture 7 dans l'ouverture de réception 6.

Bien entendu, la présente invention ne se limite pas aux formes de réalisation décrites ci-avant à titre d'exemple ; elle s'étend à d'autres variantes.

Par exemple, l'installation 1 peut être placée en extérieur, de sorte qu'un système lumineux 12 tel que décrit plus haut n'est plus nécessaire.

### Références :

| | | |
|---|---|---|
| installation 1 | section 6a | taquet 9 |
| support vertical 2 | récipient de culture 7 | système de brumisation 10 |
| face 3 | enceinte 7a | système de récupération 11 |
| intérieur de la face 3a | section transversale 7b | système lumineux 12 |
| intérieur 4 | espace intérieur 7c | del 12a |
| extrémité inférieure 5a | première extrémité 7d | tube lumineux 12b |
| extrémité supérieure 5b | deuxième extrémité 7e | |
| ouverture de réception 6 | matériau 8 | |

## Revendications

1. Installation (1) aéroponique de croissance de plants comprenant
- au moins un support vertical (2) comprenant au moins une face (3) apte à définir un intérieur (4) du support vertical (2) s'étendant d'une extrémité supérieure (5b) à une extrémité inférieure (5a) du support vertical (2), dans laquelle ladite au moins une face (3) comprend une pluralité d'ouvertures de réception (6) aptes chacune à réceptionner un récipient de culture (7),
- une pluralité de récipients de culture (7) comprenant chacun :
o une enceinte (7a) de section transversale (7b) définissant un espace intérieur (7c), et une première et une deuxième extrémités (7d, 7e) ouvertes, lesdits récipients de culture (7) étant aptes à être réceptionnés dans une ouverture de réception (6) de telle sorte que la deuxième extrémité (7e) du récipient de culture (7) est à l'intérieur du support vertical (2),
o un matériau (8) déformable pour permettre la croissance d'un plant, ledit matériau (8) étant disposé dans l'espace intérieur (7c) des récipients de culture (7), et
- un système de brumisation (10) apte à pulvériser un liquide nutritif sur les racines du plant en l'extrémité supérieure (5b) du support vertical (2).

2. Installation (1) selon la revendication 1, dans laquelle l'enceinte du récipient de culture (7) comprend une section transversale (7b) au niveau de la première extrémité (7d) de plus grande taille qu'une section transversale (7b) au niveau de la deuxième extrémité (7e) du récipient de culture (7).

3. Installation (1) selon l'une des revendications 1 ou 2, dans laquelle l'ouverture de réception (6) comprend une section (6a) de forme polygonale comprenant autant de côtés que la section transversale (7b) de l'enceinte (7a) du récipient de culture (7), ladite section (6a) de l'ouverture de réception (6) étant de plus petite taille que la première extrémité (7d) du récipient de culture (7), et de plus grande taille que la deuxième extrémité (7e) du récipient de culture (7).

4. Installation (1) selon l'une des revendications 1 à 3, dans laquelle le récipient de culture (7) est apte à être réceptionné obliquement dans l'ouverture de réception (6), de sorte que la première extrémité (7d) ouverte du récipient de culture (7) est orientée vers le haut lorsque ledit récipient de culture (7) est réceptionné dans l'ouverture de réception (6).

5. Installation (1) selon l'une des revendications 1 à 4, comprenant en outre un système de récupération (11) du liquide nutritif disposé au niveau de l'extrémité inférieure (5a) du support vertical (2).

6. Installation (1) selon la revendication 5, dans laquelle le système de brumisation (10) est apte à délivrer le liquide nutritif sous la forme d'un brouillard.

7. Installation (1) selon l'une des revendications 1 à 6, comprenant en outre un système lumineux (12) apte à éclairer la première extrémité (7d) des récipients de culture (7).

8. Installation (1) selon l'une des revendications 1 à 7, dans laquelle le récipient de culture (7) comprend un taquet (9) déformable élastiquement au niveau de sa première extrémité (7d), ledit taquet (9) étant apte à venir en appui contre un intérieur (3a) de ladite face (3) du support vertical (2), de sorte que le récipient de culture (7) est maintenu dans l'ouverture de réception (6).

9. Installation (1) selon l'une des revendications 1 à 8, dans laquelle les ouvertures de réception (6) présentent une géométrie de non révolution.

10. Installation (1) selon l'une des revendications 1 à 9, dans laquelle la section transversale (7b) présente une forme polygonale.

11. Installation (1) selon l'une des revendications 1 à 9, dans laquelle le matériau (8) est une mousse en plastique inerte.

12. Installation (1) selon l'une des revendications 1 à 10, dans laquelle les ouvertures de réception (6) sont espacées longitudinalement le long de la face (3) du support vertical (2).

13. Installation (1) selon l'une des revendications 1 à 11, dans laquelle les ouvertures de réceptions (6) sont espacées transversalement sur la face (3) du support vertical (2).

14. Support vertical (2) **caractérisé en ce qu'**il comprend au moins une face (3) apte à définir un intérieur (4) s'étendant d'une extrémité supérieure (5b) à une extrémité inférieure (5a) du support vertical (2), ladite au moins une face (3) comprenant une pluralité d'ouvertures de réception (6), ledit support vertical (2) comprenant en outre un accès autorisant une brumisation de l'intérieur (4) en l'extrémité supérieure (5b) dudit support vertical (2).

15. Système (30) **caractérisé en ce qu'**il comprend une installation (1) selon l'une des revendications 1 à 12, dans laquelle la pluralité de récipients de culture (7) est une première pluralité de récipients de culture (7), ledit système (30) comprenant en outre une deuxième pluralité de récipients de culture (7) de dimensions différentes de la première pluralité de récipients de culture (7) et réceptionnables dans lesdites ouvertures de réception (6).

16. Containeur (20) de fret **caractérisé en ce qu'**il comprend une installation (1) selon l'une des revendications 1 à 12.
